# EUROPÄISCHE PATENTANMELDUNG

(11) **EP 1 359 367 A2**
(43) Veröffentlichungstag der Anmeldung: **05.11.2003**
(21) Anmeldenummer: 03004062.0
(22) Anmeldetag: 25.02.2003
(51) Int. Cl.: F17D 1/02

(54) **Vorrichtung zur geregelten Zuführung eines kompressiblen Betriebsmediums**

(30) Priorität: 01.03.2002 DE 10209144; 23.01.2003 DE 10302709
(71) Anmelder: Behr GmbH & Co., 70469 Stuttgart (DE)
(72) Erfinder: Damsohn, Herbert, Dr.-Ing, 73773 Aichwald (DE); Kaiser, Wolfram, 79848 Bonndorf (DE); Watzlawski, Markus, 73760 Ostfildern (DE)
(74) Vertreter: Grauel, Andreas, Dr.

(57) **Zusammenfassung**

Die Erfindung betrifft eine Vorrichtung zur geregelten Zuführung eines kompressiblen Betriebsmediums von einer Hauptleitung (3) zu mindestens zwei Abzweigungen (4), wobei in der Hauptleitung (3) eine Regelungsvorrichtung (5) vorgesehen ist. Hierbei erfolgt insbesondere eine Druckregelung mit Hilfe eines Ausgleichskörpers (7).

## Beschreibung

Die Erfindung betrifft eine Vorrichtung zur geregelten Zuführung eines kompressiblen Betriebsmediums, einen Brennstoffzellenstapel gemäß Anspruch 14 sowie ein Verfahren gemäß dem Oberbegriff des Anspruches 16.

Die Umwandlung von chemischer in elektrische Energie mittels Polymerelektrolyt-Brennstoffzellen stellt eine besonders effiziente und umweltfreundliche Methode zur Gewinnung von elektrischem Strom aus den Betriebsmedien Wasserstoff und Sauerstoff dar. Dabei finden zwei räumlich getrennte Elektrodenreaktionen statt, bei denen Elektronen freigesetzt bzw. gebunden werden:
H₂ => 2H⁺ + 2e⁻ (Anodische Reaktion)
2H⁺ + 2e⁻ + ½ O₂ => H₂O (Kathodische Reaktion)

Durch elektrische Verbindung der räumlich getrennten Reaktionszonen kann ein Teil der dabei umgesetzten Reaktionsenthalpie direkt als elektrischer Strom gewonnen werden.

Eine Polymerelektrolyt-Brennstoffzelle besteht im wesentlichen aus einer als Elektrolyt fungierenden Polymermembran, welche die Reaktanden Wasserstoff und Sauerstoff voneinander trennt und eine H⁺-Protonenleitfähigkeit aufweist, sowie aus zwei mit Katalysatormaterial belegten Elektroden, die unter anderem zum Abgriff des von der Brennstoffzelle erzeugten elektrischen Stroms erforderlich sind. Elektroden und Polymermembran werden gewöhnlich zu einer Membran-Elektroden-Anordnung (MEA) kompaktiert. Zur technischen Realisierung zweier durch den Elektrolyt voneinander getrennten, elektrisch über einen Außenleiter verbundenen Gasräume werden Bipolarplatten verwendet, die aus elektrisch leitfähigem Material bestehen und mit Gasverteilerstrukturen versehen sind, die den An- und Abtransport der Reaktionsedukte und Reaktionsprodukte ermöglichen. Die Verteilerstrukturen in den einzelnen Brennstoffzellen weisen meist eine mäanderförmige Geometrie auf, um die MEA optimal mit den Betriebsmedien zu versorgen und eine günstige Abfuhr zu ermöglichen. Somit besteht eine technische Brennstoff-Einzelzelle aus einer MEA, sowie zwei Bipolarplatten, die über Versorgungsanschlüsse mit den Betriebsmedien beaufschlagt und über die das Reaktionswasser abgeführt werden und die den beim Prozess auftretenden elektrischen Strom transportieren können.

Da die maximal erzielbare Zellenspannung einer Einzel-Brennstoffzelle physikalisch begrenzt ist und im Anwendungsfall regelmäßig unter 1 V, typischerweise im Bereich von 0,5 bis 0,7 V liegt, werden zur Herstellung höherer Spannungen und Leistungen mehrere Einzel-Brennstoffzellen in Form einer elektrischen Serienschaltung zusammengeschaltet. Dieser im Folgenden als Stapelaufbau bezeichnete Komplex, welcher auch als Brennstoffzellenstack bezeichnet wird, besteht aus einer oder mehreren aufeinandergestapelten und in einer elektrischen Serienschaltung angeordneten, planaren Einzel-Brennstoffzellen.

Zur Versorgung der einzelnen Brennstoffzellen und den in die Zellen integrierten Kühlflowfields mit den jeweiligen Medien werden große Hauptleitungen, sogenannte Ports, verwendet, welche axial durch den Stapelaufbau hindurchgeführt werden und welche die einzelnen Brennstoffzellen durch seitlich abzweigende Kanalstrukturen mit den Betriebsmedien versorgen. Auf Grund der axialen Führung der Hauptleitungen besitzt eine Einzel-Brennstoffzelle gewöhnlich sechs Durchführungen für die Hauptleitungen, die für die Zu- und Abfuhr von Brenngas, Oxidator und Kühlflüssigkeit erforderlich sind. Derartige Brennstoffzellenstapel lassen jedoch noch Wünsche offen.

Es ist Aufgabe der Erfindung, eine Vorrichtung zur geregelten Zuführung eines kompressiblen Betriebsmediums mit optimierter Versorgung zur Verfügung zu stellen.

Diese Aufgabe wird gelöst durch eine Vorrichtung zur geregelten Zuführung eines kompressiblen Betriebsmediums mit den Merkmalen des Anspruches 1, einen Brennstoffzellenstapel gemäß Anspruch 14 sowie durch ein Verfahren gemäß Anspruch 16. Vorteilhafte Ausgestaltungen sind Gegenstand der Unteransprüche.

Erfindungsgemäß wird eine Vorrichtung zur geregelten Zuführung eines kompressiblen Betriebsmediums von einer Hauptleitung zu mindestens zwei Betriebs- oder Verbrauchsstellen zu Verfügung gestellt, wobei in der Hauptleitung eine, insbesondere genau eine, Regelungsvorrichtung vorgesehen ist. Hierbei können von der Hauptleitung Abzweigungen abgehen, wie bspw. bei einem Brennstoffzellenstapel, in dem die Einzel-Brennstoffzellen möglichst gleichmäßig mit dem Betriebsmedium versorgt werden sollen, oder aber die Hauptleitung leitet das Betriebsmedium direkt einer Vielzahl von Verbrauchsstellen zu, wie bspw. in einer mäanderförmigen Verteilerstruktur innerhalb einer Einzel-Brennstoffzelle, welche ihrerseits wiederum in einem Brennstoffzellenstapel angeordnet sein kann.

Gemäß einer bevorzugten Ausführungsform wird die Regelungsvorrichtung durch einen Druckregler gebildet. Dieser umfasst insbesondere einen mit einem Medium gefüllten Ausgleichskörper mit flexibler Oberfläche oder Außenhaut, welche entsprechend den in der Hauptleitung herrschenden Druckverhältnissen sich ausrichtet und für eine gleichmäßige Druckverteilung über die gesamte Hauptleitung sorgt, soweit der Ausgleichskörper hierin angeordnet ist. Als Material für die Außenhaut des Ausgleichskörpers kann beispielsweise Gummi verwendet werden. Als Füllung können gasförmige, flüssige oder feste Medien vorgesehen sein. Alternativ zu einer Füllung kann der Ausgleichskörper mit Betriebsmedium gefüllt sein und in dynamischer Verbindung mit der Hauptleitung stehen. Hierbei stellt sich bei einer senkrecht zur Strömungsrichtung gerichteten Öffnung im Ausgleichskörper ein dem Staudruck entsprechender Druck ein. Ein Abströmen des durch die Öffnung in den Ausgleichskörper gelangten Betriebsmediums kann durch eine weitere Öffnung am in Strömungsrichtung gesehen hinteren Ende des Ausgleichskörpers ermöglicht werden. Alternativ zur Ausgestaltung des Ausgleichskörpers mit einer Außenhaut kann der Ausgleichskörper auch aus einem kompakten Material ohne Außenhaut gefertigt sein.

Vorzugsweise weist der Ausgleichskörper einen veränderlichen Querschnitt innerhalb der Hauptleitung auf, wobei sein Querschnitt in Abhängigkeit von dem lokalen Druck in der Hauptleitung steht. Gemäß einer bevorzugten Ausführungsform nimmt die Querschnittsfläche des Ausgleichskörpers bei Fehlen eines Druckgradientens 10 bis 30%, bevorzugt 20%, der Hauptleitungs-Querschnittsfläche ein.

Der Ausgleichskörper kann sich über eine beliebige Teil-Länge der Hauptleitung oder aber auch über die gesamte Länge der Hauptleitung, vorzugsweise aber von der ersten bis zur letzten Abzweigung oder Verbrauchsstelle erstrecken.

Gemäß einer bevorzugten Ausführungsform ist die Regelungsvorrichtung an einer Wand der Hauptleitung befestigt, insbesondere mittels einer Klebeverbindung, die bevorzugt im Anströmbereich sowie gegebenenfalls über die gesamte Länge des Ausgleichskörpers verläuft.

Gemäß einer vorteilhaften Ausgestaltung weist die Regelungsvorrichtung eine Flüssigkeitsoberfläche auf. Besonders bevorzugt besteht die Regelungsvorrichtung aus einer Flüssigkeit mit einer freien Oberfläche. Um einen Verbrauch der Flüssigkeit während eines Betriebes der Vorrichtung zu verhindern oder zumindest zu reduzieren, ist die Verwendung einer Flüssigkeit mit möglichst geringem Dampfdruck vorteilhaft. Außerdem sollte die Flüssigkeit eine bestimmte Zähigkeit und Oberflächenspannung aufweisen, um gegebenenfalls schnell auf Änderungen im Betriebszustand der Vorrichtung reagieren zu können. Als Flüssigkeit ist ein insbesondere dickflüssiges Öl oder Gel, beispielsweise ein Silikon-Gel denkbar.

In einer weiteren Ausgestaltung ist die Zähigkeit der Flüssigkeit regelbar, vorzugsweise über eine Einstellung einer lokalen Temperatur. Besonders bevorzugt ist die Flüssigkeit hygroskopisch, so dass deren Wassergehalt - und damit auch deren Zähigkeit - über eine Variation der lokalen Temperatur regelbar ist.

Verwendet werden kann eine erfindungsgemäße Vorrichtung insbesondere in einer Hauptleitung zur Fluid-Versorgung von Anschluss- oder Abzweigstellen in einem Wärmeübertrager, in einem Verdampfer, in einem Kondensator oder für katalytisch aktive Reaktoren.

Bevorzugt wird eine erfindungsgemäße Vorrichtung in einem Brennstoffzellenstapel mit mindestens zwei Brennstoffzellen, insbesondere Polymerelektrolyt-Brennstoffzellen, sowie einer sowie einer über eine Hauptleitung und mindestens zwei Abzweigungen erfolgende Betriebsmittelzufuhr verwendet. Insbesondere ist sie hierbei in der Hauptleitung für die Kathoden- oder Anodengasversorgung vorgesehen.

Im folgenden wird die Erfindung anhand dreier Ausführungsbeispiele unter Bezugnahme auf die Zeichnung im einzelnen erläutert. In der Zeichnung zeigen:
- Fig. 1: eine schematische Darstellung eines Brennstoffzellenstapels,
- Fig. 2: eine schematische Darstellung eines erfindungsgemäßen Brennstoffzellenstapels mit dem über der Hauptleitung schematisch dargestellten Druckverlauf gemäß dem ersten Ausführungsbeispiel, und
- Fig. 3: eine schematische Darstellung eines herkömmlichen Brennstoffzellenstapels mit dem über der Hauptleitung schematisch dargestellten Druckverlauf gemäß dem Stand der Technik.

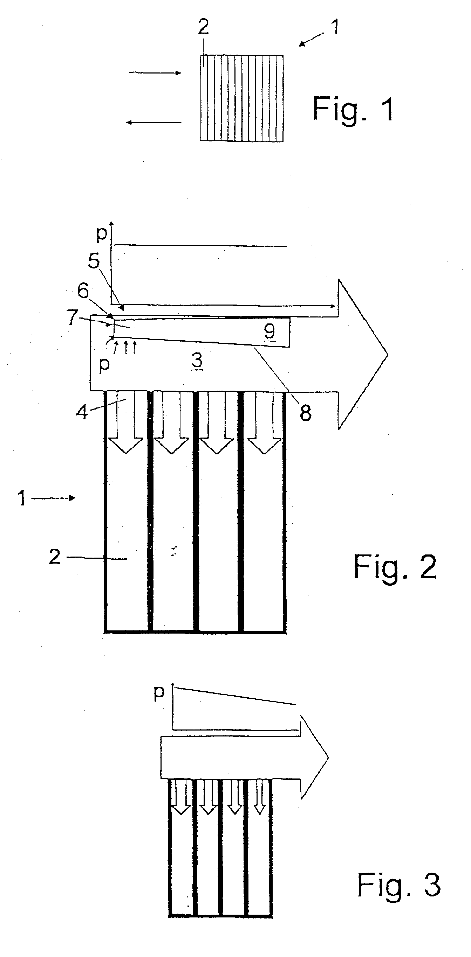

Ein erfindungsgemäßer Brennstoffzellenstapel 1, wie er schematisch in Fig. 1 und 2 dargestellt ist, besteht aus einer Mehrzahl von Einzel-Brennstoffzellen 2, welche ihrerseits aus zwei Bipolarplatten und einer dazwischen angeordneten MEA aufgebaut sind (nicht dargestellt). Die Einzel-Brennstoffzellen 2 werden über Hauptleitungen 3 und hiervon abgehenden Abzweigungen 4 mit Betriebsmedien, insbesondere mit Kühlmittel, sowie Wasserstoff (H₂) und Luft (insbesondere O₂) versorgt, welche für die oben beschriebene Reaktion erforderlich sind, wie in Fig. 1 durch den in Richtung des Brennstoffzellenstapels 1 zeigenden Pfeils angedeutet ist. Der vom Brennstoffzellenstapel 1 weg zeigende Pfeil symbolisiert die Abführung des Kühlmittels und der Reaktionsprodukte, d.h. Wasserstoff, Restluft, Wasser, elektrische Energie.

Um eine möglichst gleichmäßige Versorgung aller Einzel-Brennstoffzellen 2 des Brennstoffzellenstapels 1 mit den gasförmigen Betriebsmedien zu gewährleisten, ist in den jeweiligen Hauptleitungen 3 eine Regelungsvorrichtung 5 vorgesehen, wobei es sich bei der Regelungsvorrichtung 5 um einen Druckregler 6 in Form eines Ausgleichskörpers 7 handelt, welcher für eine gleichmäßige Verteilung des Druckes p in den gasförmigen Betriebsmedien in den Hauptleitungen 3, im Idealfall über die gesamte Länge des Brennstoffzellenstapels 1, sorgt.

Der Ausgleichskörper 7 weist eine flexible Oberfläche oder Außenhaut 8 auf und ist mit einem inkompressiblen Fluid gefüllt, im Folgenden als Füllung 9 bezeichnet. Der Ausgleichskörper 7 ist im Brennstoffzellenstapel 1 entlang der die gasförmigen Betriebsmedien zuführenden Hauptleitungen 3, insbesondere entlang der den Wasserstoff führenden Hauptleitung 3, angeordnet. Die Wirkung des Ausgleichskörpers 7 beruht dabei auf dem Prinzip der kommunizierenden Gefäße. Auf Grund seiner flexiblen Außenhaut 8 und der Füllung 9 nimmt der Ausgleichskörper 7 in einer Umgebung, die einen Druckgradienten aufweist, selbständig eine solche Form an, die zu einem homogenen Innendruck im Ausgleichskörper 7 und somit auch zu einer gleichmäßigen Druckverteilung p entlang dem Ausgleichskörper 7, d.h. entlang der Hauptleitung 3 führt. Auf diese Weise wird jede Einzel-Brennstoffzelle 2 mit dem entsprechenden Betriebsmedium unter dem gleichen Druck p versorgt, so dass alle Einzel-Brennstoffzellen 2 im Idealfall die gleichen optimalen Betriebsbedingungen haben, wie im Diagramm in Fig. 2 oben dargestellt.

Der Ausgleichskörper 7 ist in der Hauptleitung 3 des Brennstoffzellenstapels 1 entlang seiner gesamten Länge mittels einer nicht dargestellten Klebenaht befestigt, wobei er im den Abzweigungen 4 zu den Einzel-Brennstoffzellen 2 gegenüberliegenden Bereich der Hauptleitung 3 angebracht ist.

Gemäß Varianten können Ausgleichskörper auch mit Gasen, Flüssigkeiten oder Feststoffen gefüllt sein. So kann gemäß einem zweiten, nicht dargestellten Ausführungsbeispiel die Außenhaut durch eine zylindrische Gummihülle gebildet sein, welche mit Luft gefüllt und die in Längsrichtung in die Hauptleitung eingelegt ist. Dabei füllt der Ausgleichskörper bei Fehlen eines Druckgradienten 20% der Querschnittsfläche der Hauptleitung.

Gemäß einem dritten Ausführungsbeispiel, das ebenfalls nicht dargestellt ist, wird der Druck im Ausgleichskörper durch den Staudruck des Zustromes erzeugt, entsprechend einem Windsack. Insbesondere kann hierbei der Ausgleichskörper in Form eines Faltenbalges ausgebildet sein, der bevorzugt an der dem zuströmenden Betriebsmedium zugewandten Seite eine andere Querschnittsfläche als an dem zuströmenden Betriebsmedium abgewandten Seite aufweist.

Gemäß einem weiteren, nicht dargestellten Ausführungsbeispiel weist der Ausgleichskörper eine in Bezug auf die Anströmrichtung aerodynamische Kontur auf.

Gemäß noch einem weiteren, nicht dargestellten Ausführungsbeispiel weist der Ausgleichskörper eine derartige Kontur auf, dass im Falle einer Beschädigung keine Verstopfung der Abzweigungen erfolgt. Dies erfolgt insbesondere durch einen entsprechenden Spalt und die aerodynamischen Eigenschaften der gesamten Anordnung.

Ein derartiger erfindungsgemäßer Ausgleichsköper kann auch zur Optimierung der Fluidverteilung in Wärmeübertragern, Verdampfern oder katalytisch aktiven Reaktoren, die über wenigstens eine Hauptleitung und davon abzweigende Stichleitungen (Abzweigungen) verfügen, verwendet werden.

Ferner kann ein entsprechender Ausgleichskörper in den beispielsweise mäanderförmig verlaufenden Gasverteilerstrukturen von Einzel-Brennstoffzellen vorgesehen sein.

### Bezugszeichenliste

- 1: Brennstoffzellenstapel
- 2: Einzel-Brennstoffzelle
- 3: Hauptleitung
- 4: Abzweigungen
- 5: Regelungsvorrichtung
- 6: Druckregler
- 7: Ausgleichskörper
- 8: Außenhaut
- 9: Füllung

## Patentansprüche

1. Vorrichtung zur geregelten Zuführung eines kompressiblen Betriebsmediums von einer Hauptleitung (3) zu mindestens zwei Abzweigungen (4) oder Verbrauchsstellen, wobei in der Hauptleitung (3) eine Regelungsvorrichtung (5) vorgesehen ist.

2. Vorrichtung nach Anspruch 1, **dadurch gekennzeichnet, dass** die Regelungsvorrichtung (5) ein Druckregler (6) ist.

3. Vorrichtung nach einem der vorhergehenden Ansprüche, **dadurch gekennzeichnet, dass** die Regelungsvorrichtung (5) einen mit einem Medium gefüllten Ausgleichskörper (7) mit flexibler Oberfläche oder Außenhaut (8) aufweist.

4. Vorrichtung nach Anspruch 3, **dadurch gekennzeichnet, dass** der Ausgleichskörper (7) mit einem gasförmigen, flüssigen oder festen Medium gefüllt ist.

5. Vorrichtung nach Anspruch 1 oder 2, **dadurch gekennzeichnet, dass** die Regelungsvorrichtung (5) einen mit dem Betriebsmedium gefüllten Ausgleichskörper (7) mit flexibler Oberfläche oder Außenhaut (8) aufweist, wobei der Ausgleichskörper (7) mit dem Betriebsmedium in der Hauptleitung (3) in dynamischer Verbindung steht.

6. Vorrichtung nach Anspruch 3, 4 oder 5, **dadurch gekennzeichnet, dass** der Ausgleichskörper (7) einen lokal veränderlichen Querschnitt innerhalb der Hauptleitung (3) aufweist, in Abhängigkeit vom lokalen Druck in der Hauptleitung (3).

7. Vorrichtung nach einem der vorhergehenden Ansprüche, **dadurch gekennzeichnet, dass** die Regelungsvorrichtung (5) sich über eine Teil-Länge der Hauptleitung (3) zwischen der ersten Abzweigung (4) und der letzten Abzweigung (4) erstreckt.

8. Vorrichtung nach einem der Ansprüche 1 bis 6, **dadurch gekennzeichnet, dass** die Regelungsvorrichtung (5) sich über die Länge der Hauptleitung (3) zumindest von der ersten Abzweigung (4) bis zur letzten Abzweigung (4) erstreckt.

9. Vorrichtung nach einem der vorhergehenden Ansprüche, **dadurch gekennzeichnet, dass** die Regelungsvorrichtung (5) an einer Wand der Hauptleitung (3) befestigt ist.

10. Vorrichtung nach einem der vorhergehenden Ansprüche, **dadurch gekennzeichnet, dass** die Regelungsvorrichtung eine Flüssigkeitsoberfläche aufweist.

11. Vorrichtung nach Anspruch 10, **dadurch gekennzeichnet, dass** die Zähigkeit der Flüssigkeit regelbar ist, insbesondere über eine Einstellung einer lokalen Temperatur.

12. Vorrichtung nach Anspruch 11, **dadurch gekennzeichnet, dass** die Flüssigkeit hygroskopisch ist.

13. Vorrichtung nach einem der vorhergehenden Ansprüche, **gekennzeichnet durch** deren Verwendung in einer Hauptleitung zur Fluid-Versorgung von Anschluss- oder Abzweigstellen in einem Wärmeübertrager, in einem Verdampfer, in einem Kondensator oder für katalytisch aktive Reaktoren.

14. Brennstoffzellenstapel (1) mit mindestens zwei Brennstoffzellen (2) sowie einer sowie einer über eine Hauptleitung (3) und mindestens zwei Abzweigungen (4) erfolgende Betriebsmittelzufuhr, **gekennzeichnet durch** eine Regelungsvorrichtung (5) gemäß einem der vorstehenden Ansprüche.

15. Brennstoffzellenstapel nach Anspruch 11, **dadurch gekennzeichnet, dass** die Hauptleitung (3) die Kathoden- oder Anodengasversorgung ist.

16. Verfahren zum Betreiben eines Brennstoffzellenstapels (1) mit mindestens zwei Brennstoffzellen (2) sowie einer über eine Hauptleitung (3) und mindestens zwei Abzweigungen (4) erfolgende Betriebsmittelzufuhr, **dadurch gekennzeichnet, dass** das Betriebsmedium mittels einer Regelungsvorrichtung (5) gemäß einem der vorstehenden Ansprüche druckgeregelt den einzelnen Brennstoffzellen (2) zugeführt wird.
